(19) Europäisches Patentamt
European Patent Office
Office européen des brevets

(11) EP 2 365 059 A1

(12) **EUROPEAN PATENT APPLICATION**

(43) Date of publication:
**14.09.2011 Bulletin 2011/37**

(51) Int Cl.:
***C11D 3/42*** *(2006.01)* ***C11D 3/40*** *(2006.01)*

(21) Application number: **10155098.6**

(22) Date of filing: **01.03.2010**

(84) Designated Contracting States:
**AT BE BG CH CY CZ DE DK EE ES FI FR GB GR HR HU IE IS IT LI LT LU LV MC MK MT NL NO PL PT RO SE SI SK SM TR**
Designated Extension States:
**AL BA ME RS**

(71) Applicant: **The Procter & Gamble Company
Cincinnati, OH 45202 (US)**

(72) Inventors:
- **Lant, Neil Joseph
Newcastle upon Tyne, NE3 5RP (GB)**
- **Patterson, Steven George
Washington, Tyne and Wear NE38 8LP (GB)**

(74) Representative: **Howard, Phillip Jan
Procter & Gamble
Technical Centres Limited
Whitley Road
Longbenton
Newcastle upon Tyne NE12 9TS (GB)**

(54) **Solid laundry detergent composition comprising C.I. fluorescent brightener 260 in alpha-crystalline form**

(57) The present invention relates to a solid laundry detergent composition comprising: (a) detersive surfactant; (b) C.I. fluorescent brightener 260 in alpha-crystalline form having the formula:

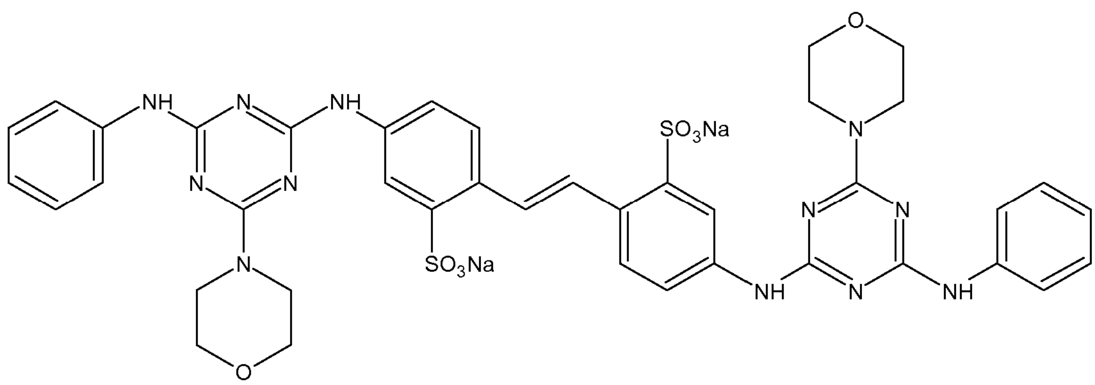

;

(c) from 0wt% to 10wt% zeolite builder; (d) from 0wt% to 10wt% phosphate builder; (e) optionally from 0wt% to 10wt% silicate salt; (f) optionally from 0wt% to 10wt% layered silicate; and (g) other detergent ingredients.

EP 2 365 059 A1

## Description

FIELD OF THE INVENTION

The present invention relates to laundry detergent compositions, especially solid laundry detergent compositions that exhibit excellent water solubility and good cleaning performance, even at cold washing temperatures.

BACKGROUND OF THE INVENTION

Recent trends in laundry detergent powders have seen dramatic increases in product solubility, especially in cold water washing temperatures. Removal of large quantities of insoluble builders, such as zeolite, from the laundry powder have contributed significantly to this improve dissolution profile. However, there remains a need to improve the cleaning performance of these low built laundry powders. Recent focus on hardness tolerant detersive surfactant systems and optimisation of polymer systems has improved the cleaning performance. However, the recent trend in cold water washing temperatures means that there remains a need to improve the cold water cleaning and whiteness profile of the low built laundry detergent composition.

The Inventors have found that the cold water cleaning profile and whiteness profile of these low built laundry powders are improved when C.I. fluorescent brightener 260 in a specific crystalline form is incorporated into the low built solid laundry detergent composition.

Whilst C.I. fluorescent brightener 260 in beta-crystalline form is conventionally used in laundry detergent products, the Inventors have found that improved cleaning and whiteness performance is obtained when C.I. fluorescent brightener 260 in alpha-crystalline form is incorporated into a low built solid laundry detergent composition. Further improvements in the cleaning and whiteness profile of these low built solid laundry detergent compositions is obtained when this specific brightener is incorporated in combination with a preferred calcium crystal growth inhibitor, or a preferred secondary alcohol detersive surfactant, and/or a preferred enzyme cocktail.

SUMMARY OF THE INVENTION

The present invention provides a solid laundry detergent composition as defined by the claims.

DETAILED DESCRIPTION OF THE INVENTION

<u>Solid laundry detergent composition</u>

The solid laundry composition comprises: (a) detersive surfactant; (b) C.I. fluorescent brightener 260 in alpha-crystalline form; (c) from 0wt% to 10wt% zeolite builder; (d) from 0wt% to 10wt% phosphate builder; (e) optionally from 0wt% to 10wt% silicate salt; (f) optionally from 0wt% to 10wt% layered silicate; and (g) other detergent ingredients.

The solid laundry detergent composition is a fully formulated laundry detergent composition, not a portion thereof such as a spray-drying or agglomerate particle that only forms part of the laundry detergent composition. Typically, the solid laundry detergent composition comprises a plurality of chemically different particles, such as spray-dried base detergent particles and/or agglomerate base detergent particles and/or extrudate base detergent particles, in combination with one or more, typically two or more, or three or more, or four or more, or five or more, or six or more, or even ten or more particles selected from: surfactant particles, including surfactant agglomerates, surfactant extrudates, surfactant needles, surfactant noodles, surfactant flakes; builder particles, such as sodium carbonate and sodium silicate particles, phosphate particles, zeolite particles, silicate salt particles, carbonate salt particles; polymer particles such as cellulosic polymer particles, polyester particles, polyamine particles, terephthalate polymer particles, polyethylene glycol based polymer particles; aesthetic particles such as coloured noodles or needles or lamellae particles; enzyme particles such as protease prills, lipase prills, cellulase prills, amylase prills, mannanase prills, pectate lyase prills, xyloglucanase prills, and co-prills of any of these enzymes; bleach particles, such as percarbonate particles, especially coated percarbonate particles, such as percarbonate coated with carbonate salt, sulphate salt, silicate salt, borosilicate salt, or combinations thereof, perborate particles, bleach catalyst particles such as transition metal catalyst particles, or isoquinolinium bleach catalyst particles, pre-formed peracid particles, especially coated pre-formed peracid particles; filler particles such as sulphate salt particles; clay particles such as montmorillonite particles or particles of clay and silicone; flocculant particles such as polyethylene oxide particles, wax particles such as wax agglomerates, brightener particles, dye transfer inhibition particles; dye fixative particles, perfume particles such as perfume microcapsules and starch encapsulated perfume accord particles, or pro-perfume particles such as Schiff base reaction product particles, bleach activator particles such as oxybenzene sulphonate bleach activator particles and tetra acetyl ethylene diamine bleach activator particles; hueing dye particles; chelant particles such as chelant agglomerates; and any combination thereof.

The composition can be in any solid form, typically particulate form, such as a free-flowing particulate composition, or tablet. Preferably, the composition is in free-flowing particulate form.

Preferably, the composition comprises a particle, wherein the particle comprises sodium carbonate and sodium silicate.

Preferably, the composition comprises a particle, wherein the particle has a weight average particle size of from 100 micrometer to 1,000 micrometers, wherein the particle comprises C.I. Fluorescent Brightener 260 in micronized particulate form, having a weight average primary particle size of from 3 to 30 micrometers.

The composition typically has a particle size distribution such that at least 80wt%, preferably at least 90wt%, or even 95wt%, or even substantially all, of the particles have a particle size in the range of from 100 micrometers to 1,500 micrometers, preferably from 200 micrometers, or even 250 micrometers, and preferably to 1,000 micrometers, or even to 800 micrometers.

The composition typically has a bulk density in the range of from 400g/l to 1,200g/l, preferably from 400g/l to 1,000g/1, or to 800g/1.

Preferably, upon dilution in de-ionised water at a concentration of 1g/L at a temperature of 25°C, the composition forms an aqueous detergent solution having a pH in the range of from 7 to 11.

Preferably, the composition has a reserve alkalinity to pH 9.5 in the range of from 5 to 10. The reserve alkalinity is typically determined by the method described in more detail in test method 1.

<u>Detersive surfactant</u>

Suitable detersive surfactants include anionic detersive surfactants, non-ionic detersive surfactant, cationic detersive surfactants, zwitterionic detersive surfactants and amphoteric detersive surfactants.

Preferred anionic detersive surfactants include sulphate and sulphonate detersive surfactants.

Preferred sulphonate detersive surfactants include alkyl benzene sulphonate, preferably $C_{10-13}$ alkyl benzene sulphonate. Suitable alkyl benzene sulphonate (LAS) is obtainable, preferably obtained, by sulphonating commercially available linear alkyl benzene (LAB); suitable LAB includes low 2-phenyl LAB, such as those supplied by Sasol under the tradename Isochem® or those supplied by Petresa under the tradename Petrelab®, other suitable LAB include high 2-phenyl LAB, such as those supplied by Sasol under the tradename Hyblene®. A suitable anionic detersive surfactant is alkyl benzene sulphonate that is obtained by DETAL catalyzed process, although other synthesis routes, such as HF, may also be suitable.

Preferred sulphate detersive surfactants include alkyl sulphate, preferably $C_{8-18}$ alkyl sulphate, or predominantly $C_{12}$ alkyl sulphate.

Another preferred sulphate detersive surfactant is alkyl alkoxylated sulphate, preferably alkyl ethoxylated sulphate, preferably a $C_{8-18}$ alkyl alkoxylated sulphate, preferably a $C_{8-18}$ alkyl ethoxylated sulphate, preferably the alkyl alkoxylated sulphate has an average degree of alkoxylation of from 0.5 to 20, preferably from 0.5 to 10, preferably the alkyl alkoxylated sulphate is a $C_{8-18}$ alkyl ethoxylated sulphate having an average degree of ethoxylation of from 0.5 to 10, preferably from 0.5 to 7, more preferably from 0.5 to 5 and most preferably from 0.5 to 3.

The alkyl sulphate, alkyl alkoxylated sulphate and alkyl benzene sulphonates may be linear or branched, substituted or un-substituted.

Suitable non-ionic detersive surfactants are selected from the group consisting of: $C_8$-$C_{18}$ alkyl ethoxylates, such as, NEODOL® non-ionic surfactants from Shell; $C_6$-$C_{12}$ alkyl phenol alkoxylates wherein preferably the alkoxylate units are ethyleneoxy units, propyleneoxy units or a mixture thereof; $C_{12}$-$C_{18}$ alcohol and $C_6$-$C_{12}$ alkyl phenol condensates with ethylene oxide/propylene oxide block polymers such as Pluronic® from BASF; $C_{14}$-$C_{22}$ mid-chain branched alcohols; $C_{14}$-$C_{22}$ mid-chain branched alkyl alkoxylates, preferably having an average degree of alkoxylation of from 1 to 30; alkylpolysaccharides, preferably alkylpolyglycosides; polyhydroxy fatty acid amides; ether capped poly(oxyalkylated) alcohol surfactants; and mixtures thereof.

Preferred non-ionic detersive surfactants are alkyl polyglucoside and/or an alkyl alkoxylated alcohol.

Preferred non-ionic detersive surfactants include alkyl alkoxylated alcohols, preferably $C_8$-$_{18}$ alkyl alkoxylated alcohol, preferably a $C_{8-18}$ alkyl ethoxylated alcohol, preferably the alkyl alkoxylated alcohol has an average degree of alkoxylation of from 0.5 to 50, preferably from 1 to 30, or from 1 to 20, or from 1 to 10, preferably the alkyl alkoxylated alcohol is a $C_{8-18}$ alkyl ethoxylated alcohol having an average degree of ethoxylation of from 1 to 10, preferably from 1 to 7, more preferably from 1 to 5 and most preferably from 3 to 7. The alkyl alkoxylated alcohol can be linear or branched, and substituted or un-substituted.

Suitable cationic detersive surfactants include alkyl pyridinium compounds, alkyl quaternary ammonium compounds, alkyl quaternary phosphonium compounds, alkyl ternary sulphonium compounds, and mixtures thereof.

Preferred cationic detersive surfactants are quaternary ammonium compounds having the general formula:

$$(R)(R_1)(R_2)(R_3)N^+ X^-$$

wherein, R is a linear or branched, substituted or unsubstituted $C_{6-18}$ alkyl or alkenyl moiety, $R_1$ and $R_2$ are independently selected from methyl or ethyl moieties, $R_3$ is a hydroxyl, hydroxymethyl or a hydroxyethyl moiety, X is an anion which provides charge neutrality, preferred anions include: halides, preferably chloride; sulphate; and sulphonate. Preferred cationic detersive surfactants are mono-$C_{6-18}$ alkyl mono-hydroxyethyl di-methyl quaternary ammonium chlorides. Highly preferred cationic detersive surfactants are mono-$C_{8-10}$ alkyl mono-hydroxyethyl di-methyl quaternary ammonium chloride, mono-$C_{10-12}$ alkyl mono-hydroxyethyl di-methyl quaternary ammonium chloride and mono-$C_{10}$ alkyl mono-hydroxyethyl di-methyl quaternary ammonium chloride.

Preferably, the composition comprises secondary alcohol-based detersive surfactant having the formula

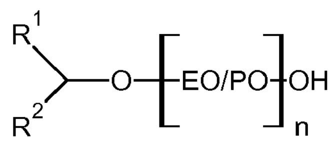

wherein $R^1$ = linear or branched, substituted or unsubstituted, saturated or unsaturated $C_{2-8}$ alkyl;
wherein $R^2$ = linear or branched, substituted or unsubstituted, saturated or unsaturated $C_{2-8}$ alkyl,
wherein the total number of carbon atoms present in $R^1 + R^2$ moieties is in the range of from 7 to 13;
wherein EO/PO are alkoxy moieties selected from ethoxy, propoxy, or mixtures thereof, preferably the EO/PO alkoxyl moieties are in random or block configuration;
wherein n is the average degree of alkoxylation and is in the range of from 4 to 10.

Preferably, the composition comprises primary alcohol-based detersive surfactant having the formula

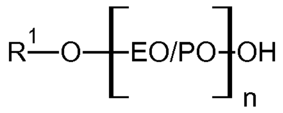

wherein $R^1$ = linear or branched, substituted or unsubstituted, saturated or unsaturated $C_{10-18}$ alkyl;
wherein EO/PO are alkoxy moieties selected from ethoxy, propoxy, or mixtures thereof, preferably the EO/PO alkoxyl moieties are in random or block configuration;
wherein n is the average degree of alkoxylation and is in the range of from 4 to 10.

Brightener

The composition preferably comprises C.I. fluorescent brightener 260 in alpha-crystalline form having the following structure:

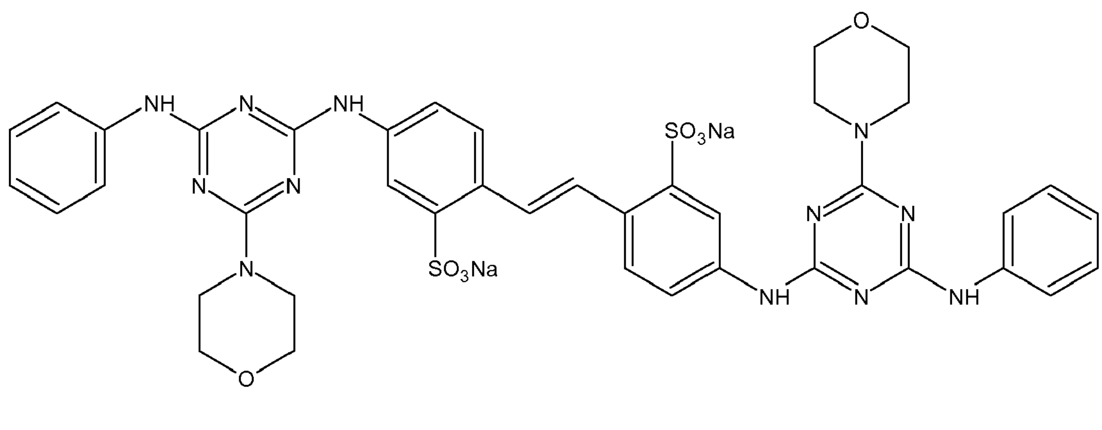

The C.I. fluorescent brightener 260 is preferably predominantly in alpha-crystalline form. Predominantly in

alpha-crystalline form means that preferably at least 50wt%, or at least 75wt%, or even at least 90wt%, or at least 99wt%, or even substantially all, of the C.I. fluorescent brightener 260 is in alpha-crystalline form.

The brightener is typically in micronized particulate form, having a weight average primary particle size of from 3 to 30 micrometers, preferably from 3 micrometers to 20 micrometers, and most preferably from 3 to 10 micrometers.

The composition may comprises C.I. fluorescent brightener 260 in beta-crystalline form, and preferably the weight ratio of: (i) C.I. fluorescent brightener 260 in alpha-crystalline form, to (ii) C.I. fluorescent brightener 260 in beta-crystalline form is at least 0.1, preferably at least 0.6.

BE680847 relates to a process for making C.I fluorescent brightener 260 in alpha-crystalline form.

Zeolite builder

Preferably, the composition comprises from 0wt% to 10wt% zeolite builder, preferably the composition comprises less than 8wt%, or less than 6wt%, or even less than 4wt%, or even less than 2wt% zeolite builder. Preferably the composition is essentially free of zeolite builder. By essentially free it is typically meant herein as meaning no deliberately added. Typical zeolites include zeolite A, such as zeolite 4A, and zeolite MAP.

Phosphate builder

Preferably, the composition comprises from 0wt% to 10wt% phosphate builder, preferably the composition comprises less than 8wt%, or less than 6wt%, or even less than 4wt%, or even less than 2wt% phosphate builder. Preferably the composition is essentially free of phosphate builder. By essentially free it is typically meant herein as meaning no deliberately added. A typical phosphate builder is sodium tripolyphosphate.

Silicate salt

Preferably, the composition comprises from 0wt% to 10wt% silicate salt. However, it may be preferred for the composition to comprise a silicate salt, preferably from 1wt% to 20wt%, preferably from 1wt% to 10wt% silicate salt. Suitable silicate salts include sodium silicate having a ratio of from 1.0 to 2.0, preferably from 1.6 to 2.0. A suitable silicate salt is sodium metasilicate.

It may be preferred for the composition to optionally comprise from 0wt% to 10wt% layered silicate. Preferably, the composition is substantially free of layered silicate. By "substantially free" it is typically meant herein to mean comprises no deliberately added.

Hueing agent

Hueing dyes are formulated to deposit onto fabrics from the wash liquor so as to improve fabric whiteness perception. Preferably the hueing agent dye is blue or violet. It is preferred that the shading dye(s) have a peak absorption wavelength of from 550nm to 650nm, preferably from 570nm to 630nm. A combination of dyes which together have the visual effect on the human eye as a single dye having a peak absorption wavelength on polyester of from 550nm to 650nm, preferably from 570nm to 630nm. This may be provided for example by mixing a red and green-blue dye to yield a blue or violet shade.

Dyes are coloured organic molecules which are soluble in aqueous media that contain surfactants. Dyes are described in 'Industrial Dyes', Wiley VCH 2002, K .Hunger (editor). Dyes are listed in the Color Index International published by Society of Dyers and Colourists and the American Association of Textile Chemists and Colorists. Dyes are preferably selected from the classes of basic, acid, hydrophobic, direct and polymeric dyes, and dye-conjugates. Those skilled in the art of detergent formulation are able to select suitable hueing dyes from these publications. Polymeric hueing dyes are commercially available, for example from Milliken, Spartanburg, South Carolina, USA.

Examples of suitable dyes are direct violet 7 , direct violet 9 , direct violet 11, direct violet 26, direct violet 31, direct violet 35, direct violet 40, direct violet 41, direct violet 51, direct violet 66, direct violet 99, acid violet 50, acid blue 9, acid violet 17, acid black 1 , acid red 17, acid blue 29, solvent violet 13, disperse violet 27 disperse violet 26, disperse violet 28, disperse violet 63 and disperse violet 77, basic blue 16, basic blue 65, basic blue 66, basic blue 67, basic blue 71, basic blue 159, basic violet 19, basic violet 35, basic violet 38, basic violet 48; basic blue 3 , basic blue 75, basic blue 95, basic blue 122, basic blue 124, basic blue 141, thiazolium dyes, reactive blue 19, reactive blue 163, reactive blue 182, reactive blue 96, Liquitint® Violet CT (Milliken, Spartanburg, USA) and Azo-CM-Cellulose (Megazyme, Bray, Republic of Ireland).

Calcium carbonate crystal growth inhibitor

Preferably, the composition comprises a calcium carbonate crystal growth inhibitor selected from the group consisting of: 1-hydroxyethanediphosphonic acid (HEDP) and salt thereof; N,N-dicarboxymethyl-2-aminopentane-1,5-dioic acid and salt thereof; 2-phosphonobutane-1,2,4-tricarboxylic acid and salt thereof; and combination thereof.

Chelant

The composition may also comprise a chelant selected from: diethylene triamine pentaacetate, diethylene triamine penta(methyl phosphonic acid), ethylene diamine-N'N'-disuccinic acid, ethylene diamine tetraacetate, ethylene diamine tetra(methylene phosphonic acid) and hydroxyethane di(methylene phosphonic acid). A preferred chelant is ethylene diamine-N'N'-disuccinic acid (EDDS) and/or hydroxyethane diphosphonic acid (HEDP). The laundry detergent composition preferably comprises ethylene diamine-N'N'- disuccinic acid or salt thereof. Preferably the ethylene diamine-N'N'-disuccinic acid is in S,S enantiomeric form. Preferably the composition comprises 4,5-dihydroxy-m-benzenedisulfonic acid disodium salt. Preferred chelants are also calcium carbonate crystal growth inhibitors.

Carboxylate polymer

Preferably, the composition comprises a carboxylate polymer such as a maleate/acrylate random copolymer or polyacrylate homopolymer. Preferably the carboxylate polymer is a polyacrylate homopolymer having a molecular weight of from 4,000 Da to 9,000 Da, most preferably from 6,000 Da to 9,000 Da.

Soil release polymer

Preferably, the composition comprises a soil release polymer having a structure as defined by one of the following structures (I), (II) or (III):

(I) $-[(OCHR^1-CHR^2)_a-O-OC-Ar-CO-]_d$

(II) $-[(OCHR^3-CHR^4)_b-O-OC-sAr-CO-]_e$

(III) $-[(OCHR^5-CHR^6)_c-OR^7]_f$

wherein:

a, b and c are from 1 to 200;
d, e and f are from 1 to 50;
Ar is a 1,4-substituted phenylene;
sAr is 1,3-substituted phenylene substituted in position 5 with $SO_3Me$;
Me is Li, K, Mg/2, Ca/2, A1/3, ammonium, mono-, di-, tri-, or tetraalkylammonium wherein the alkyl groups are $C_1$-$C_{18}$ alkyl or $C_2$-$C_{10}$ hydroxyalkyl, or mixtures thereof;
$R^1$, $R^2$, $R^3$, $R^4$, $R^5$ and $R^6$ are independently selected from H or $C_1$-$C_{18}$ n- or iso-alkyl; and
$R^7$ is a linear or branched $C_1$-$C_{18}$ alkyl, or a linear or branched $C_2$-$C_{30}$ alkenyl, or a cycloalkyl group with 5 to 9 carbon atoms, or a $C_8$-$C_{30}$ aryl group, or a $C_6$-$C_{30}$ arylalkyl group.

Cellulosic polymer

Preferably, the composition comprises a cellulosic polymer, preferably selected from alkyl cellulose, alkyl alkoxyalkyl cellulose, carboxyalkyl cellulose, alkyl carboxyalkyl, more preferably selected from carboxymethyl cellulose, methyl cellulose, methyl hydroxyethyl cellulose, methyl carboxymethyl cellulose, and mixures thereof. Preferably the carboxymethyl cellulose has a degree of carboxymethyl substitution from 0.5 to 0.9 and a molecular weight from 100,000 Da to 300,000 Da.

Lipase

Suitable lipases include those of bacterial or fungal origin. Chemically modified or protein engineered mutants are included. Examples of useful lipases include lipases from *Humicola* (synonym *Thermomyces*), e.g., from *H. lanuginosa* (*T. lanuginosus*) as described in EP 258 068 and EP 305 216 or from *H. insolens* as described in WO 96/13580,

a Pseudomonas lipase, e.g., from *P. alcaligenes* or *P. pseudoalcaligenes* (EP 218 272), *P. cepacia* (EP 331 376), *P. stutzeri* (GB 1,372,034), *P.fluorescens, Pseudomonas* sp. strain SD 705 (WO 95/06720 and WO 96/27002), *P. wisconsinensis* (WO 96/12012), a *Bacillus* lipase, e.g., from *B. subtilis* (Dartois et al. (1993), Biochemica et Biophysica Acta, 1131, 253-360), *B. stearothermophilus* (JP 64/744992) or *B. pumilus* (WO 91/16422).

The lipase may be a "first cycle lipase" such as those described in U.S. Patent 6,939,702 and US PA 2009/0217464. In one aspect, the lipase is a first-wash lipase, preferably a variant of the wild-type lipase from Thermomyces lanuginosus comprising T231R and N233R mutations. The wild-type sequence is the 269 amino acids (amino acids 23-291) of the Swissprot accession number Swiss-Prot 059952 (derived from Thermomyces lanuginosus (Humicola lanuginosa)). Preferred lipases would include those sold under the tradenames Lipex®, Lipolex® and Lipoclean® by Novozymes, Bagsvaerd, Denmark.

Preferably, the composition comprises a variant of Thermomyces lanuginosa lipase having >90% identity with the wild type amino acid and comprising substitution(s) at T231 and/or N233, preferably T231R and N233R.

Protease

Suitable proteases include metalloproteases and/or serine proteases, including neutral or alkaline microbial serine proteases, such as subtilisins (EC 3.4.21.62). Suitable proteases include those of animal, vegetable or microbial origin. In one aspect, such suitable protease may be of microbial origin. The suitable proteases include chemically or genetically modified mutants of the aforementioned suitable proteases. In one aspect, the suitable protease may be a serine protease, such as an alkaline microbial protease or/and a trypsin-type protease. Examples of suitable neutral or alkaline proteases include:

(a) subtilisins (EC 3.4.21.62), including those derived from Bacillus, such as Bacillus lentus, B. alkalophilus, B. subtilis, B. amyloliquefaciens, Bacillus pumilus and Bacillus gibsonii described in US 6,312,936, US 5,679,630, US 4,760,025, US 7,262,042 and WO09/021867.

(b) trypsin-type or chymotrypsin-type proteases, such as trypsin (e.g., of porcine or bovine origin), including the Fusarium protease described in WO 89/06270 and the chymotrypsin proteases derived from Cellumonas described in WO 05/052161 and WO 05/052146.

(c) metalloproteases, including those derived from Bacillus amyloliquefaciens described in WO 07/044993.

Preferred proteases include those derived from Bacillus gibsonii or Bacillus Lentus.

Suitable commercially available protease enzymes include those sold under the trade names Alcalase®, Savinase®, Primase®, Durazym®, Polarzyme®, Kannase®, Liquanase®, Liquanase Ultra®, Savinase Ultra®, Ovozyme®, Neutrase®, Everlase® and Esperase® by Novozymes A/S (Denmark), those sold under the tradename Maxatase®, Maxacal®, Maxapem®, Properase®, Purafect®, Purafect Prime®, Purafect Ox®, FN3® , FN4®, Excellase® and Purafect OXP® by Genencor International, those sold under the tradename Opticlean® and Optimase® by Solvay Enzymes, those available from Henkel/ Kemira, namely BLAP (sequence shown in Figure 29 of US 5,352,604 with the folowing mutations S99D + S101 R + S103A + V104I + G159S, hereinafter referred to as BLAP), BLAP R (BLAP with S3T + V4I + V199M + V205I + L217D), BLAP X (BLAP with S3T + V4I + V205I) and BLAP F49 (BLAP with S3T + V4I + A194P + V199M + V205I + L217D) - all from Henkel/Kemira; and KAP (Bacillus alkalophilus subtilisin with mutations A230V + S256G + S259N) from Kao.

Preferably, the composition comprises a subtilisin protease selected from BLAP, BLAP R, BLAP X or BLAP F49.

Cellulase

Suitable cellulases include those of bacterial or fungal origin. Chemically modified or protein engineered mutants are included. Suitable cellulases include cellulases from the genera *Bacillus, Pseudomonas, Humicola, Fusarium, Thielavia, Acremonium,* e.g., the fungal cellulases produced from *Humicola insolens, Myceliophthora thermophila* and *Fusarium oxysporum* disclosed in US 4,435,307, US 5,648,263, US 5,691,178, US 5,776,757 and WO 89/09259.

Especially suitable cellulases are the alkaline or neutral cellulases having colour care benefits. Examples of such cellulases are cellulases described in EP 0 495 257, EP 0 531 372, WO 96/11262, WO 96/29397, WO 98/08940. Other examples are cellulase variants such as those described in WO 94/07998, EP 0 531 315, US 5,457,046, US 5,686,593, US 5,763,254, WO 95/24471, WO 98/12307 and PCT/DK98/00299.

Commercially available cellulases include CELLUZYME®, and CAREZYME® (Novozymes A/S), CLAZINASE®, and PURADAX HA® (Genencor International Inc.), and KAC-500(B)® (Kao Corporation).

In one aspect, the cellulase can include microbial-derived endoglucanases exhibiting endo-beta-1,4-glucanase activity (E.C. 3.2.1.4), including a bacterial polypeptide endogenous to a member of the genus Bacillus which has a sequence of at least 90%, 94%, 97% and even 99% identity to the amino acid sequence SEQ ID NO:2 in US 7,141,403)

and mixtures thereof. Suitable endoglucanases are sold under the tradenames Celluclean® and Whitezyme® (Novozymes A/S, Bagsvaerd, Denmark).

Preferably, the composition comprises a cleaning cellulase belonging to Glycosyl Hydrolase family 45 having a molecular weight of from 17kDa to 30 kDa, for example the endoglucanases sold under the tradename Biotouch® NCD, DCC and DCL (AB Enzymes, Darmstadt, Germany).

Amylase

Preferably, the composition comprises an amylase with greater than 60% identity to the AA560 alpha amylase endogenous to Bacillus sp. DSM 12649, preferably a variant of the AA560 alpha amylase endogenous to Bacillus sp. DSM 12649 having:

(a) mutations at one or more of positions 9, 26, 149. 182, 186, 202, 257, 295, 299, 323, 339 and 345; and
(b) optionally with one or more, preferably all of the substitutions and/or deletions in the following positions: 118, 183, 184, 195, 320 and 458, which if present preferably comprise R118K, D183*, G184*, N195F, R320K and/or R458K.

Suitable commercially available amylase enzymes include Stainzyme® Plus, Stainzyme®, Natalase, Termamyl®, Termamyl® Ultra, Liquezyme® SZ (all Novozymes, Bagsvaerd, Denmark) and Spezyme® AA or Ultraphlow (Genencor, Palo Alto, USA).

Choline oxidase

Preferably, the composition comprises a choline oxidase enzyme such as the 59.1 kDa choline oxidase enzyme endogenous to *Arthrobacter nicotianae,* produced using the techniques disclosed in D. Ribitsch et al., Applied Microbiology and Biotechnology, Volume 81, Number 5, pp875-886, (2009).

Other enzymes

Other suitable enzymes are peroxidases/oxidases, which include those of plant, bacterial or fungal origin. Chemically modified or protein engineered mutants are included. Examples of useful peroxidases include peroxidases from Coprinus, e.g., from *C. cinereus,* and variants thereof as those described in WO 93/24618, WO 95/10602, and WO 98/15257.

Commercially available peroxidases include GUARDZYME® (Novozymes A/S).

Other preferred enzymes include pectate lyases sold under the tradenames Pectawash®, Pectaway® and mannanases sold under the tradenames Mannaway® (all from Novozymes A/S, Bagsvaerd, Denmark), and Purabrite® (Genencor International Inc., Palo Alto, California).

Identity

The relativity between two amino acid sequences is described by the parameter "identity". For purposes of the present invention, the alignment of two amino acid sequences is determined by using the Needle program from the EMBOSS package (http://emboss.org) version 2.8.0. The Needle program implements the global alignment algorithm described in Needleman, S. B. and Wunsch, C. D. (1970) J. Mol. Biol. 48, 443-453. The substitution matrix used is BLOSUM62, gap opening penalty is 10, and gap extension penalty is 0.5.

Other detergent ingredients

The composition typically comprises other detergent ingredients. Suitable detergent ingredients include: transition metal catalysts; imine bleach boosters; enzymes such as amylases, carbohydrases, cellulases, laccases, lipases, bleaching enzymes such as oxidases and peroxidases, proteases, pectate lyases and mannanases; source of peroxygen such as percarbonate salts and/or perborate salts, preferred is sodium percarbonate, the source of peroxygen is preferably at least partially coated, preferably completely coated, by a coating ingredient such as a carbonate salt, a sulphate salt, a silicate salt, borosilicate, or mixtures, including mixed salts, thereof; bleach activator such as tetraacetyl ethylene diamine, oxybenzene sulphonate bleach activators such as nonanoyl oxybenzene sulphonate, caprolactam bleach activators, imide bleach activators such as N-nonanoyl-N-methyl acetamide, preformed peracids such as N,N-pthaloylamino peroxycaproic acid, nonylamido peroxyadipic acid or dibenzoyl peroxide; suds suppressing systems such as silicone based suds suppressors; brighteners; hueing agents; photobleach; fabric-softening agents such as clay,

silicone and/or quaternary ammonium compounds; flocculants such as polyethylene oxide; dye transfer inhibitors such as polyvinylpyrrolidone, poly 4-vinylpyridine N-oxide and/or co-polymer of vinylpyrrolidone and vinylimidazole; fabric integrity components such as oligomers produced by the condensation of imidazole and epichlorhydrin; soil dispersants and soil anti-redeposition aids such as alkoxylated polyamines and ethoxylated ethyleneimine polymers; anti-redeposition components such as polyesters and/or terephthalate polymers, polyethylene glycol including polyethylene glycol substituted with vinyl alcohol and/or vinyl acetate pendant groups; perfumes such as perfume microcapsules, polymer assisted perfume delivery systems including Schiff base perfume/polymer complexes, starch encapsulated perfume accords; soap rings; aesthetic particles including coloured noodles and/or needles; dyes; fillers such as sodium sulphate, although it may be preferred for the composition to be substantially free of fillers; carbonate salt including sodium carbonate and/or sodium bicarbonate; silicate salt such as sodium silicate, including 1.6R and 2.0R sodium silicate, or sodium metasilicate; co-polyesters of di-carboxylic acids and diols; cellulosic polymers such as methyl cellulose, carboxymethyl cellulose, hydroxyethoxycellulose, or other alkyl or alkylalkoxy cellulose, and hydrophobically modified cellulose; carboxylic acid and/or salts thereof, including citric acid and/or sodium citrate; and any combination thereof.

A highly preferred detergent ingredient is citric acid.

EXAMPLES

Test Method 1: Determination of Reserve Alkalinity (RA) to pH 9.5

As used herein, the term "reserve alkalinity" is a measure of the buffering capacity of the detergent composition (g/NaOH/100g detergent composition) determined by titrating a 1% (w/v) solution of detergent composition with hydrochloric acid to pH 9.5 at 21°C.

The following method can be used to determine the reserve alkalinity of a solid detergent composition, assuming a 10g product sample, 1 litre water volume, 100 $cm^3$ aliquot and titration using 0.2M hydrochloric acid:

Equation used for the calculation of reserve alkalinity:

**Reserve Alkalinity** (to pH 9.5) as % alkali in g NaOH/100 g product

$$= \frac{T \times M \times 40 \times V}{10 \times W \times A}$$

T = titre ($cm^3$) to pH 9.5
M = Molarity of HCl(aq) (0.2)
40 = Molecular weight of NaOH
V = Total volume (1000 $cm^3$)
W = Weight of product (10 g)
A = Aliquot (100 $cm^3$)

Obtain a 10g sample accurately weighed to two decimal places, of fully formulated detergent composition. The sample should be obtained using a Pascall sampler in a dust cabinet. Add the 10g sample to a plastic beaker and add 200 ml of carbon dioxide-free deionised water. Agitate using a magnetic stirrer on a stirring plate at 150 rpm until fully dissolved and for at least 15 minutes. Transfer the contents of the beaker to a 1 litre volumetric flask and make up to 1 litre with deionised water. Mix well and take a 100 mls ± 1 ml aliquot using a 100 mls pipette immediately. Measure and record the pH and temperature of the sample using a pH meter capable of reading to +0.01pH units, with stirring, ensuring temperature is 21°C +/- 2°C. Titrate whilst stirring with 0.2M hydrochloric acid until pH measures exactly 9.5. Note the millilitres of hydrochloric acid used. Take the average titre of three identical repeats. Carry out the calculation described above to calculate RA to pH 9.5.

Examples 1-6

Unless otherwise indicated, materials can be obtained from Sigma-Aldrich, The Old Brickyard, Gillingham, Dorset, United Kingdom.

The following compositions are made by combining the listed ingredients in the listed proportions (weight % of

active material except where noted otherwise).

Granular dry laundry detergent compositions designed for use in washing machines or hand washing processes.

Current typical usage concentrations for these products range from 0.5g to 20g product per liter of wash water, e.g. an 80g dose for 15L wash volume. However, in the future with increasing product compaction, it would be feasible to reduce the level of sodium sulfate and/or sodium carbonate in these compositions and increase the quantities of the other constituents so as to achieve the same amounts of active ingredients in the wash at a lower dosage.

| | 1 | 2 | 3 | 4 | 5 | 6 |
|---|---|---|---|---|---|---|
| | wt%* | wt%* | wt%* | wt%* | Wt% * | wt%* |
| Sodium linear | 10.3 | 10.7 | 14.0 | 17.0 | 12.2 | 8.3 |
| alkylbenzenesulfonate with average aliphatic chain length $C_{11-12}$ | | | | | | |
| Sodium lauryl sulfate | - | 3.5 | - | 1.4 | 1.2 | - |
| Sodium $C_{12-14}$ alcohol ethoxy-3-sulfate | - | - | 0.8 | - | - | 3.0 |
| $C_{13-15}$ oxo alcohol ethoxylate with average 7 moles of ethoxylation (Lutensol® A07) | 1.57 | - | - | - | 1.2 | - |
| $C_{10}$-Guerbet (2-propylheptan-1-ol) alcohol ethoxylate with average 7 moles of ethoxylation (Lutensol® XP70) | - | 1.5 | - | - | 1.2 | - |
| $C_{16-18}$ alcohol ethoxylate with average 7 moles of ethoxylation | - | 0.5 | - | - | 0.3 | - |
| $C_{12-18}$ alcohol ethoxylate with average 5 moles of ethoxylation | - | 0.3 | - | - | - | - |
| $C_{12-14}$ alkyl hydroxyethyl dimethyl ammonium chloride (Praepagen® HY) | | | 0.7 | 0.54 | 0.1 | 1.0 |
| Sodium tripolyphosphate | - | - | 1.7 | - | 1.0 | - |
| Zeolite A | 2.7 | 3.4 | - | - | 0.5 | 1.6 |
| Citric acid | - | - | - | 1.4 | 1.4 - 2.0 | 2.0 |
| Sodium citrate | - | 1.9 | - | - | - | - |
| Silicate 1.6R | 6.18 | - | 7.2 | 6.6 | - | - |
| Sodium carbonate | 21.49 | 7.0 | 15.6 | 16.0 | 19.2 | - |
| Silicate/carbonate cogranule (Nabion® 15) | - | - | - | - | - | 15.4 |
| Sodium bicarbonate | - | 1.5 | - | 2.3 | 4.4 | 1.3 |
| Sodium polyacrylate (MW 4000, Sokalan PA25 CL) | - | - | 1.0 | - | - | - |

(continued)

| | 1 | 2 | 3 | 4 | 5 | 6 |
|---|---|---|---|---|---|---|
| Sodium polyacrylate (MW 8000, Sokalan PA30 CL) | 1.45 | 1.6 | - | 0.97 | 1.0 | - |
| Sodium polyacrylate/ maleate copolymer MW 70,000, 70:30 ratio, Sokalan® CP5 | - | - | 0.3 | - | - | 3.0 |
| Polyethylene glycol / vinyl acetate random graft copolymer | | | 0.8 | 1.0 | 1.0 | - |
| Carboxymethyl cellulose (Finnfix® GDA) | 1.93 | 2.63 | 0.6 | - | - | - |
| Carboxymethyl cellulose (Finnfix® V) | - | - | - | 0.3 | 1.1 | 0.92 |
| C.I. Fluorescent Brightener 260 in alpha form (Optiblanc® Ecobright) | 0.10 | 0.13 | 0.10 | 0.03 | 0.05 | 0.18 |
| C.I. Fluorescent Brightener 351 (Tinopal® CBS) | - | 0.06 | 0.08 | - | - | - |
| Fluorescent Brightener KX (Parawhite KX) | - | - | - | 0.03 | 0.05 | - |
| Diethylenetriamine pentaacetic acid | - | - | 0.2 | 0.1 | 0.2 | - |
| Tetrasodium S,S-ethylenediamine disuccinate | - | - | - | 0.3 | - | 0.3 |
| Diethylenetriamine penta (methylene phosphonic acid), heptasodium salt | - | 0.2 | - | - | - | - |
| 1-Hydroxyethane -1,1-diphosphonic acid | 0.5 | 0.4 | 0.5 | - | 0.4 | 0.4 |
| 2-Phosphonobutane 1,2,4-tricarboxylic acid (Bayhibit® AM) | - | - | - | 0.4 | - | - |
| $MgSO_4$ | - | - | 0.5 | - | - | 0.4 |
| Sodium percarbonate | 8.5 | 18.7 | 5.0 | - | 6.0 | 15.0 |
| Tetraacetylethylene diamine | 3.05 | 9.0 | - | - | 1.0 | 4.5 |
| Sodium nonanoyloxybenzene sulfonate | - | - | 1.2 | - | - | - |
| Protease (Savinase®)* | 4.3 | 3.3 | 6.3 | 5.7 | 3.3 | - |
| Protease (BLAP-X)* | - | - | - | - | - | 2.2 |

(continued)

| | 1 | 2 | 3 | 4 | 5 | 6 |
|---|---|---|---|---|---|---|
| Amylase (Stainzyme® Plus)* | 2.2 | 1.51 | 1.0 | 2.2 | 1.9 | 3.3 |
| Lipase (Lipoclean®)* | 3.3 | 26.0 | 3.6 | 8.3 | - | 2.7 |
| Endoglucanase (Celluclean®)* | - | - | 5.3 | 3.3 | - | - |
| Choline oxidase* | 2.2 | - | - | - | 2.1 | 1.1 |
| Endoglucanase (Biotouch® DCC)* | 2.1 | 1.3 | - | - | - | 2.4 |
| Mannaway®* | 1.3 | 1.54 | 1.3 | - | 1.2 | 1.9 |
| $C_{16-22}$ Soap | 1.27 | 0.68 | - | 1.3 | - | 1.7 |
| Direct Violet 9 | - | - | 0.0003 | 0.0004 | - | - |
| Solvent Violet 13 | - | - | 0.002 | - | - | - |
| Soil release polymer (Texcare® SRA300F) | 0.3 | 1.2 | - | 1.0 | 0.33 | 0.3 |
| Photobleach Mixture of zinc and aluminium phthalocyanine tetrasulfonates (Tinolux® BMC) | - | - | - | - | - | 0.0015 |
| Photobleach C.I. Food Red 14 | - | - | 0.001 | - | - | 0.001 |
| Suds suppressor granule | 0.2 | 0.2 | - | - | - | 0.3 |
| Moisture | 7.0 | 6.3 | 8.9 | 9.1 | 4.3 | 4.6 |
| Perfume | 0.2 | 0.3 | 0.4 | 0.3 | 0.2 | 0.3 |
| Sodium sulfate | Balance to 100% | Balance to 100% | Balance to 100% | Balance to 100% | Balance to 100% | Balance to 100% |
| * All enzyme levels expressed as mg active enzyme protein per 100g detergent composition | | | | | | |

Notes for examples:

Surfactant ingredients can be obtained from BASF, Ludwigshafen, Germany (Lutensol®); Shell Chemicals, London, UK; Stepan, Northfield, Illinois, USA; Huntsman, Huntsman, Salt Lake City, Utah, USA; Clariant, Sulzbach, Germany (Praepagen®).
Sodium tripolyphosphate can be obtained from Rhodia, Paris, France.
Zeolite can be obtained from Industrial Zeolite (UK) Ltd, Grays, Essex, UK.
Citric acid and sodium citrate can be obtained from Jungbunzlauer, Basel, Switzerland.
Silicate 1.6R can be obtained from Ineos Silicas, Warrington, UK.
Sodium carbonate, sodium bicarbonate and sodium percarbonate can be obtained from Solvay, Brussels, Belgium.
Silicate/carbonate cogranule can be obtained from Rhodia, Paris, France, as Nabion® 15. Polyacrylate, polyacrylate/maleate copolymers can be obtained from BASF, Ludwigshafen, Germany.
Polyethylene glycol / vinyl acetate random graft copolymer is a polyvinyl acetate grafted polyethylene oxide copolymer having a polyethylene oxide backbone and multiple polyvinyl acetate side chains. The molecular weight of the polyethylene oxide backbone is about 6000 and the weight ratio of the polyethylene oxide to polyvinyl acetate is about 40 to 60 and no more than 1 grafting point per 50 ethylene oxide units. It can be obtained from BASF, Ludwigshafen, Germany.
Carboxymethylcellulose can be obtained from CPKelco, Arnhem, The Netherlands.

C.I. Fluorescent Brightener 260 in alpha form can be obtained from 3V Sigma, Bergamo, Italy as Optiblanc® Ecobright.

C.I. Fluorescent Brightener 351 can be obtained from Ciba Specialty Chemicals, Basel, Switzerland as Tinopal® CBS-X.

Fluorescent Brightener KX has the following structure and can be obtained from Paramount Minerals and Chemicals, Mumbai, India as Parawhite KX

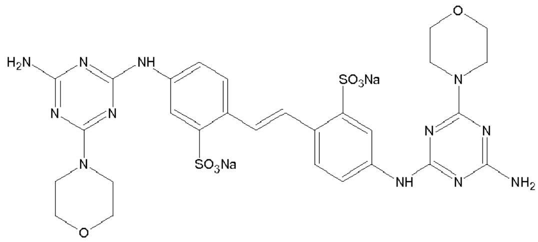

Diethylenetriamine pentaacetic acid can be obtained from Dow Chemical, Midland, Michigan, USA.

Tetrasodium S,S-ethylenediamine disuccinate can be obtained from Innospec, Ellesmere Port, UK.

Diethylenetriamine penta (methylene phosphonic acid), heptasodium salt, can be obtained from Dow Chemical, Midland, Michigan, USA.

1-Hydroxyethane -1,1-diphosphonic acid can be obtained from Thermphos, Vlissingen-Oost, The Netherlands.

2-Phosphonobutane 1,2,4-tricarboxylic acid can be obtained from Bayer, Leverkusen, Germany as Bayhibit® AM.

Tetraacetylethylene diamine can be obtained from Warwick International, Mostyn, Wales Sodium nonanoyloxybenzene sulfonate can be obtained from Eastman, Batesville, Arkansas, USA.

Enzymes Savinase®, Stainzyme® Plus, Lipoclean®, Celluclean® and Mannaway® can be obtained from Novozymes, Bagsvaerd, Denmark.

Enzyme BLAP-X can be obtained from Biozym, Kundl, Austria.

Enzyme Biotouch® DCC can be obtained from AB Enzymes, Darmstadt, Germany.

Soap.

Choline Oxidase enzyme is the 59.1 kDa choline oxidase enzyme endogenous to *Arthrobacter nicotianae,* produced using the techniques disclosed in D. Ribitsch et al., Applied Microbiology and Biotechnology, Volume 81, Number 5, pp875-886, (2009).

Direct Violet 9 can be obtained from Ciba Specialty Chemicals, Basel, Switzerland.

Solvent Violet 13 can be obtained from Ningbo Lixing Chemical Co., Ltd. Ningbo, Zhejiang, China.

Soil release polymer can be obtained from Clariant, Sulzbach, Germany, as Texcare® SRA300F.

Mixture of zinc and aluminium phthalocyanine tetrasulfonates can be obtained from Ciba Specialty Chemicals, Basel, Switzerland, as Tinolux® BMC.

Suds suppressor granule can be obtained from Dow Coming, Barry, UK.

The dimensions and values disclosed herein are not to be understood as being strictly limited to the exact numerical values recited. Instead, unless otherwise specified, each such dimension is intended to mean both the recited value and a functionally equivalent range surrounding that value. For example, a dimension disclosed as "40 mm" is intended to mean "about 40 mm".

## Claims

**1.** A solid laundry detergent composition comprising:

a) detersive surfactant;

b) C.I. fluorescent brightener 260 in alpha-crystalline form having the formula:

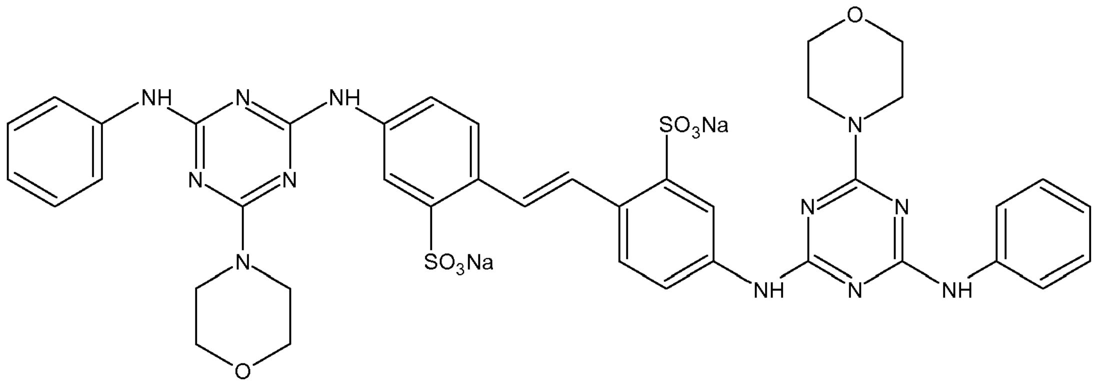

c) from 0wt% to 10wt% zeolite builder;
d) from 0wt% to 10wt% phosphate builder;
e) optionally from 0wt% to 10wt% silicate salt;
f) optionally from 0wt% to 10wt% layered silicate; and
g) other detergent ingredients.

**2.** A composition according to any preceding claim, wherein the composition comprises secondary alcohol-based detersive surfactant having the formula:

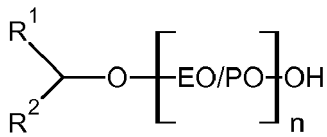

wherein $R^1$ = linear or branched, substituted or unsubstituted, saturated or unsaturated $C_{2-8}$ alkyl;
wherein $R^2$ = linear or branched, substituted or unsubstituted, saturated or unsaturated $C_{2-8}$ alkyl;
wherein the total number of carbon atoms present in $R^1$ + $R^2$ moieties is in the range of from 7 to 13;
wherein EO/PO are alkoxy moieties selected from ethoxy, propoxy, or mixtures thereof;
wherein n is the average degree of alkoxylation and is in the range of from 4 to 10.

**3.** A composition according to any preceding claim, wherein the composition comprises primary alcohol-based detersive surfactant having the formula:

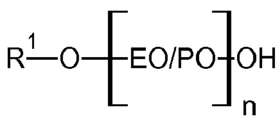

wherein $R^1$ = linear or branched, substituted or unsubstituted, saturated or unsaturated $C_{10-18}$ s alkyl;
wherein EO/PO are alkoxy moieties selected from ethoxy, propoxy, or mixtures thereof;
wherein n is the average degree of alkoxylation and is in the range of from 4 to 10.

**4.** A composition according to any preceding claim, wherein the composition comprises a hueing agent.

**5.** A composition according to any preceding claim, wherein the composition comprises a calcium carbonate crystal growth inhibitor selected from the group consisting of: 1-hydroxyethanediphosphonic acid or salt thereof; N,N-dicarboxymethyl-2-aminopentane-1,5-dioic acid or salt thereof; 2-phosphonobutane-1,2,4-tricarboxylic acid or salt thereof; and any combination thereof.

**6.** A composition according to any preceding claim, wherein the composition comprises citric acid.

**7.** A composition according to any preceding claim, wherein the composition comprises polyacrylate having a molecular of from 6,000 Da to 9,000 Da.

**8.** A composition according to any preceding claim, wherein the composition comprises a soil release polymer having a structure as defined by one of the following structures (I), (II) or (III):

$$-[(OCHR^1\text{-}CHR^2)_a\text{-O-OC-Ar-CO-}]_d \quad (I)$$

$$-[(OCHR^3\text{-}CHR^4)_b\text{-O-OC-sAr-CO-}]_e \quad (II)$$

$$-[(OCHR^5\text{-}CHR^6)_c\text{-}OR^7]_f \quad (III)$$

wherein:

a, b and c are from 1 to 200;
d, e and f are from 1 to 50;
Ar is a 1,4-substituted phenylene;
sAr is 1,3-substituted phenylene substituted in position 5 with $SO_3Me$;
Me is Li, K, Mg/2, Ca/2, A1/3, ammonium, mono-, di-, tri-, or tetraalkylammonium wherein the alkyl groups are $C_1$-$C_{18}$ alkyl or $C_2$-$C_{10}$ hydroxyalkyl, or mixtures thereof;
$R^1$, $R^2$, $R^3$, $R^4$, $R^5$ and $R^6$ are independently selected from H or $C_1$-$C_{18}$ n- or iso-alkyl; and
$R^7$ is a linear or branched $C_1$-$C_{18}$ alkyl, or a linear or branched $C_2$-$C_{30}$ alkenyl, or a cycloalkyl group with 5 to 9 carbon atoms, or a $C_8$-$C_{30}$ aryl group, or a $C_6$-$C_{30}$ arylalkyl group.

**9.** A composition according to any preceding claim, wherein the composition comprises a cellulosic polymer, preferably selected from alkyl cellulose, alkyl alkoxyalkyl cellulose, carboxylalkyl cellulose, alkyl carboxyalkyl, more preferably selected from carboxymethyl cellulose, methyl cellulose, methyl hydroxyethyl cellulose, methyl carboxymethyl cellulose, and mixures thereof.

**10.** A composition according to any preceding claim, wherein the composition comprises a variant of Thermomyces lanuginosa lipase having >90% identity with the wild type amino acid and comprises substitution(s) at T231 and/or N233.

**11.** A composition according to any preceding claim, wherein the composition comprises a subtilisin protease selected from BLAP, BLAP R, BLAP X or BLAP F49.

**12.** A composition according to any preceding claim, wherein the composition comprises a cleaning cellulase belonging to Glycosyl Hydrolase family 45 having a molecular weight of from 17kDa to 30 kDa.

**13.** A composition according to any preceding claim, wherein the composition comprises an amylase with greater than 60% identity to the AA560 alpha amylase endogenous to Bacillus sp. DSM 12649, preferably a variant of the AA560 alpha amylase endogenous to Bacillus sp. DSM 12649 having:

(a) mutations at one or more of positions 9, 26, 149. 182, 186, 202, 257, 295, 299, 323, 339 and 345; and
(b) optionally with one or more, preferably all of the substitutions and/or deletions in the following positions: 118, 183, 184, 195, 320 and 458, which if present preferably comprise R118K, D183*, G184*, N195F, R320K and/or R458K.

**14.** A composition according to any preceding claim, wherein the composition comprises a particle, wherein the particle comprises sodium carbonate and sodium silicate.

**15.** A composition according to any preceding claim, wherein the composition comprises a choline oxidase enzyme.

**16.** A composition according to any preceding claim, wherein the composition comprises C.I. fluorescent brightener 260 in beta-crystalline form, and wherein the weight ratio of: (i) C.I. fluorescent brightener 260 in alpha-crystalline form, to (ii) C.I. fluorescent brightener 260 in beta-crystalline form is at least 0.1, preferably at least 0.6.

Europäisches Patentamt
European Patent Office
Office européen des brevets

# EUROPEAN SEARCH REPORT

Application Number
EP 10 15 5098

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | BE 680 847 A (STERLING DRUG INC.)<br>14 November 1966 (1966-11-14)<br>* example échantillon I *<br>* page 2, line 26 - line 29 *<br>* page 3, line 7 - line 9 *<br>* page 13, line 17 - line 22 *<br>----- | 1-16 | INV.<br>C11D3/42<br>C11D3/40 |
| | | | TECHNICAL FIELDS SEARCHED (IPC) |
| | | | C11D |

The present search report has been drawn up for all claims

1

| Place of search | Date of completion of the search | Examiner |
|---|---|---|
| Munich | 15 June 2010 | Culmann, J |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons
& : member of the same patent family, corresponding document

EPO FORM 1503 03.82 (P04C01)

## ANNEX TO THE EUROPEAN SEARCH REPORT ON EUROPEAN PATENT APPLICATION NO. EP 10 15 5098

This annex lists the patent family members relating to the patent documents cited in the above-mentioned European search report.
The members are as contained in the European Patent Office EDP file on
The European Patent Office is in no way liable for these particulars which are merely given for the purpose of information.

15-06-2010

| Patent document cited in search report | Publication date | Patent family member(s) | Publication date |
|---|---|---|---|
| BE 680847 A | 14-11-1966 | NONE | |

EPO FORM P0459

For more details about this annex : see Official Journal of the European Patent Office, No. 12/82

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- BE 680847
- EP 258068 A
- EP 305216 A
- WO 9613580 A
- EP 218272 A
- EP 331376 A
- GB 1372034 A
- WO 9506720 A
- WO 9627002 A
- WO 9612012 A
- JP 64744992 B
- WO 9116422 A
- US 6939702 B
- US PA20090217464 A
- CH 059952
- US 6312936 B
- US 5679630 A
- US 4760025 A
- US 7262042 B
- WO 09021867 A
- WO 8906270 A
- WO 05052161 A
- WO 05052146 A
- WO 07044993 A
- US 5352604 A
- US 4435307 A
- US 5648263 A
- US 5691178 A
- US 5776757 A
- WO 8909259 A
- EP 0495257 A
- EP 0531372 A
- WO 9611262 A
- WO 9629397 A
- WO 9808940 A
- WO 9407998 A
- EP 0531315 A
- US 5457046 A
- US 5686593 A
- US 5763254 A
- WO 9524471 A
- WO 9812307 A
- DK 9800299 W
- US 7141403 B
- WO 9324618 A
- WO 9510602 A
- WO 9815257 A


### Non-patent literature cited in the description


- Industrial Dyes. Wiley VCH, 2002
- **DARTOIS et al.** *Biochemica et Biophysica Acta,* vol. 1131, 253-360
- **D. RIBITSCH et al.** *Applied Microbiology and Biotechnology,* 2009, vol. 81 (5), 875-886
- **NEEDLEMAN, S. B. ; WUNSCH, C. D.** *J. Mol. Biol.,* 1970, vol. 48, 443-453